# EUROPEAN PATENT APPLICATION

(11) **EP 4 530 175 A1**
(43) Date of publication of application: **02.04.2025**
(21) Application number: 24202091.5
(22) Date of filing: 24.09.2024
(51) Int. Cl.: B62M 7/02, B62M 7/06

(54) **STRADDLE-TYPE VEHICLE SWING ARM WITH CASE TO HOUSE AN ELECTRIC COMPONENT**

(30) Priority: 29.09.2023 JP 2023169519
(71) Applicant: Suzuki Motor Corporation, Shizuoka 432-8611 (JP)
(72) Inventor: OMOSAKO, Takahiro, Shizuoka (JP); FUKUSHIMA, Hideaki, Shizuoka (JP); SUGITA, Hisayuki, Shizuoka (JP); YAMAMOTO, Takayo, Shizuoka (JP); KISAKIBARU, Naotaka, Shizuoka (JP); KATSUYA, Yosuke, Shizuoka (JP)
(74) Representative: Haseltine Lake Kempner LLP

(57) **Abstract**

A straddle-type vehicle (1) includes a swing arm (40) swingably supported by a vehicle body frame (10). The swing arm (40) includes a pivot (43, 44) configured to be coupled to the vehicle body frame (10) at a front end portion of the swing arm (40), a rear wheel support portion (52) configured to rotatably support a rear wheel (56) at a rear end portion of the swing arm (40), and a case (49) configured to house an electric component (31) in front of the rear end portion of the swing arm (40). The case is formed with an opening (55 to 58) through which the electric component (31) is exposed to the outside.

## Description

### TECHNICAL FIELD

The present disclosure relates to a straddle-type vehicle.

### BACKGROUND ART

In recent years, an electric straddle-type vehicle that travels using electric power has been developed. As this type of straddle-type vehicle, one in which a motor is installed at a rear end portion of a swing arm is known (for example, see JPH08-67278A). The straddle-type vehicle described in JPH08-67278A is a scooter-type vehicle in which a low floor board is installed in front of a seat, a lower frame passes below the floor board, and side frames rise rearward from a rear end of the lower frame toward the seat. A swing arm is swingably supported at the rear end of the lower frame, and a direct drive type motor is installed at the rear end portion of the swing arm coaxially with a rear wheel.

However, in the straddle-type vehicle described in JPH08-67278A, since the motor is easily accessible to a driver, it is necessary to cover the entire motor with a cover. Therefore, heat of the motor is trapped inside the cover, and the motor temperature rises, making it impossible to ensure sufficient output. In addition, a similar problem may occur when electric components other than the motor are installed on the swing arm.

### SUMMARY OF INVENTION

Aspect of non-limiting embodiments of the present disclosure relates to provide a straddle-type vehicle capable of reducing a decrease in the performance of an electric component even in a case where the electric component is installed on a swing arm.

Aspects of certain non-limiting embodiments of the present disclosure address the features discussed above and/or other features not described above. However, aspects of the non-limiting embodiments are not required to address the above features, and aspects of the non-limiting embodiments of the present disclosure may not address features described above.

According to an aspect of the present disclosure, there is provided a straddle-type vehicle including:
a swing arm swingably supported by a vehicle body frame,
in which the swing arm includes:
   a pivot configured to be coupled to the vehicle body frame at a front end portion of the swing arm;
   a rear wheel support portion configured to rotatably support a rear wheel at a rear end portion of the swing arm (40); and
   a case configured to house an electric component in front of the arm rear end portion, and
the case is formed with an opening through which the electric component is exposed to the outside.

### BRIEF DESCRIPTION OF DRAWINGS

Exemplary embodiment(s) of the present invention will be described in detail based on the following figures, wherein:
FIG. 1 is a left side view of a straddle-type vehicle according to the present embodiment;
FIG. 2 is a right side view of a vehicle body rear portion according to the present embodiment;
FIG. 3 is a cross-sectional view of the vehicle body rear portion in FIG. 2 taken along a line A-A;
FIG. 4 is a bottom view of the vehicle body rear portion according to the present embodiment;
FIG. 5 is a cross-sectional view of the vehicle body rear portion in FIG. 2 taken along a line B-B;
FIG. 6 is a cross-sectional view of the vehicle body rear portion in FIG. 2 taken along a line C-C;
FIG. 7 is a cross-sectional view of the vehicle body rear portion in FIG. 2 taken along a line D-D; and
FIG. 8 is a cross-sectional view of the vehicle body rear portion in FIG. 6 taken along a line E-E.

### DESCRIPTION OF EMBODIMENTS

A straddle-type vehicle according to an aspect of the present disclosure includes a swing arm swingably supported by a vehicle body frame. A pivot at an arm front end portion of the swing arm is coupled to the vehicle body frame, and a rear wheel is rotatably supported by a rear wheel support portion at an arm rear end portion. An electric component is housed in a case in front of the arm rear end portion, and the case is formed with an opening configured to allow the electric component to be exposed to the outside. By positioning the electric component in the center of a vehicle body in front of the rear wheel, the motor is not easily accessible to a driver, and it is not necessary to completely cover the electric component with a case. By forming the opening in the case, the heat of the electric component is easily released from the opening of the case, and it is possible to reduce a decrease in the performance of the electric component caused by a rise in the temperature of the electric component.

### [Embodiment]

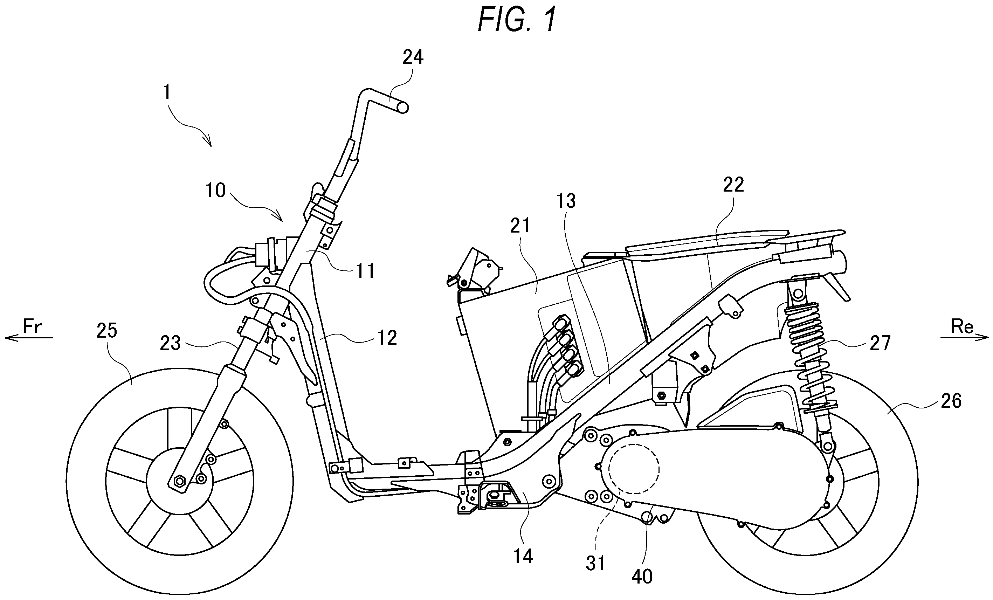

Hereinafter, a straddle-type vehicle according to the present embodiment will be described with reference to the accompanying drawings. FIG. 1 is a left side view of a straddle-type vehicle according to the present embodiment. In the following drawings, an arrow Fr indicates a vehicle front side, an arrow Re indicates a vehicle rear side, an arrow L indicates a vehicle left side, and an arrow R indicates a vehicle right side.

As shown in FIG. 1, a straddle-type vehicle 1 is constructed by attaching various covers, as a vehicle body exterior, to an underbone type vehicle body frame 10. A head pipe 11 is provided at a front end portion of the vehicle body frame 10. A front frame 12 extends rearward and obliquely downward from the head pipe 11. A pair of left and right side frames 13 are connected to a lower portion of the front frame 12. The pair of side frames 13 extend rearward and then rise up diagonally upward at the rear. A fixed-type battery 21 and a storage box 22 are installed inside the pair of side frames 13. A seat (not shown) is installed above the battery 21 and the storage box 22.

A front fork 23 is steerably supported by the head pipe 11 via a steering shaft (not shown). A handle 24 is provided at an upper portion of the steering shaft. A front wheel 25 is rotatably supported at a lower portion of the front fork 23. A swing arm 40 is supported by pivot brackets 14 of the pair of side frames 13. A rear wheel 26 is rotatably supported by a rear portion of the swing arm 40. Rear end portions of the pair of side frames 13 and a rear portion of the swing arm 40 are connected to each other via a rear suspension 27. As the swing arm 40 swings, the rear suspension 27 expands and contracts to absorb unevenness on the road surface.

In a general electric straddle-type vehicle, in order to secure an installation space for a battery, a storage box, and a floor board, a motor is installed on the vehicle rear side such as an arm rear end portion side or an inner side of the rear wheel. Since the motor is easily accessible to a driver at the vehicle rear side, it is necessary to cover the entire motor to ensure safety. Therefore, there is a concern that heat is trapped inside the cover and the output of the motor decreases. Since the motor, which is a heavy object, is away from the center of gravity at the center of the vehicle body, there is a possibility that the moment of inertia at the time of turning becomes large and the driving performance may deteriorate. Vibrations caused by unevenness on the road surface are transmitted to the motor near the rear wheel, so the motor and fasteners are required to have strict vibration resistance.

The unsprung load becomes heavy, making it impossible for the rear wheel to follow the unevenness on the road surface. Vibrations from the rear wheel are transmitted to a driver in the seat, and riding comfort is deteriorated. Further, in order to install a heavy object in a rear portion of a swing arm, sufficient rigidity is required, and increasing the rigidity of the swing arm increases the weight. Here, in the electric straddle-type vehicle 1 according to the present embodiment, in order to eliminate the above-mentioned problems, the swing arm 40 with the motor 31 installed on an arm front end portion side is mounted, and the swing arm 40 is formed with an opening for exposing the motor 31 to the outside so as to improve heat dissipation.

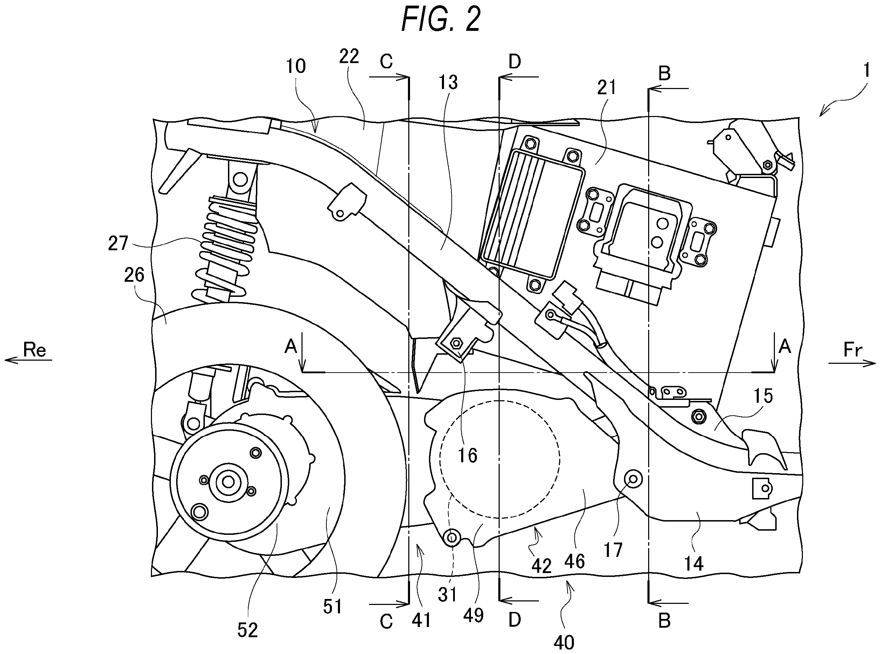

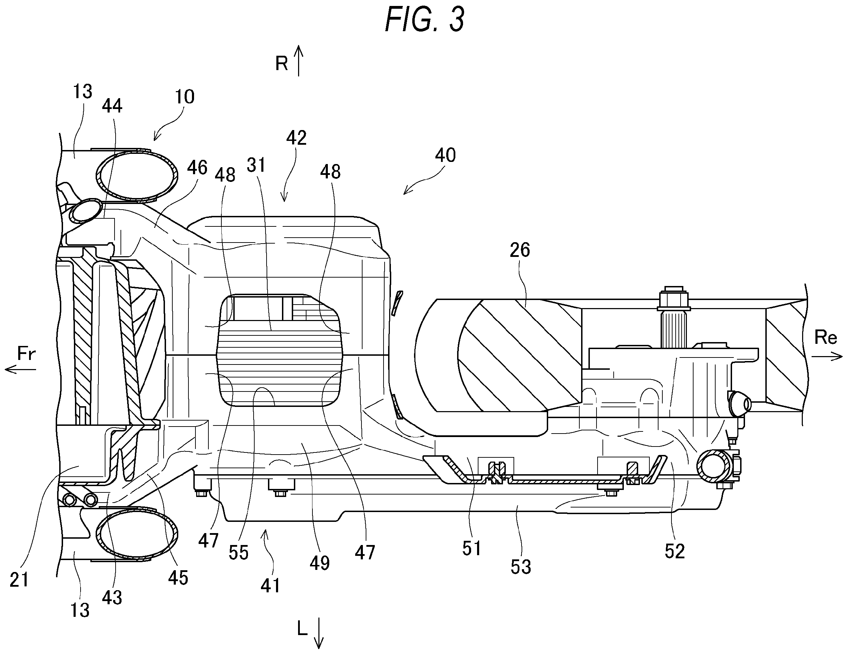

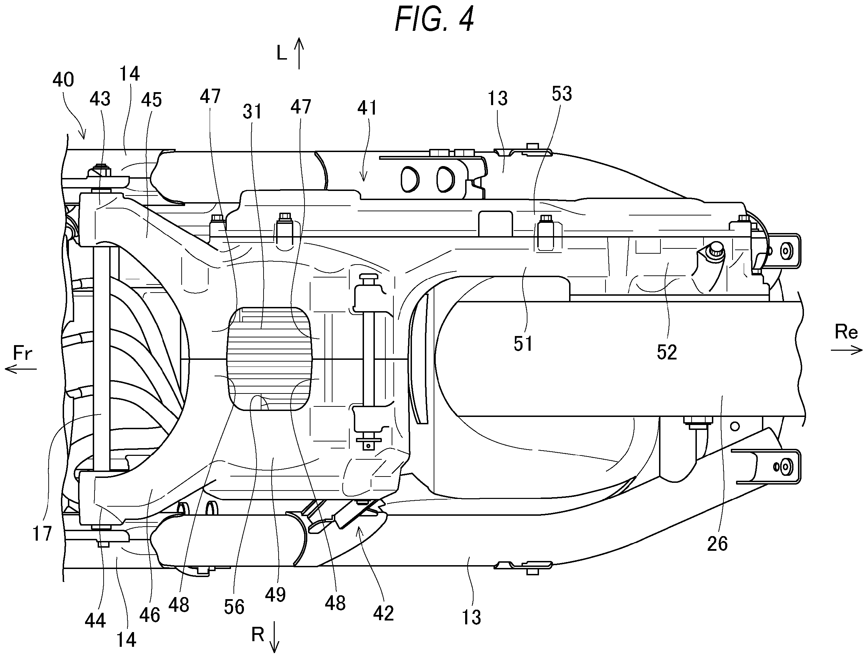

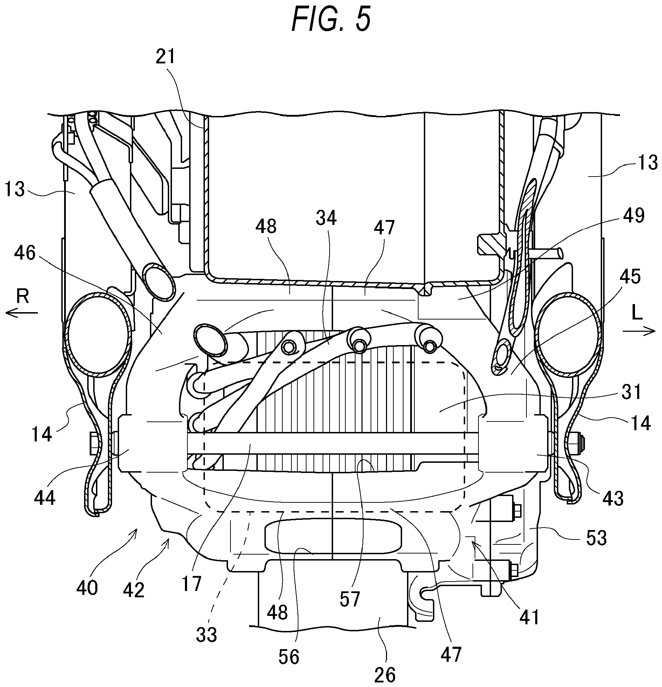

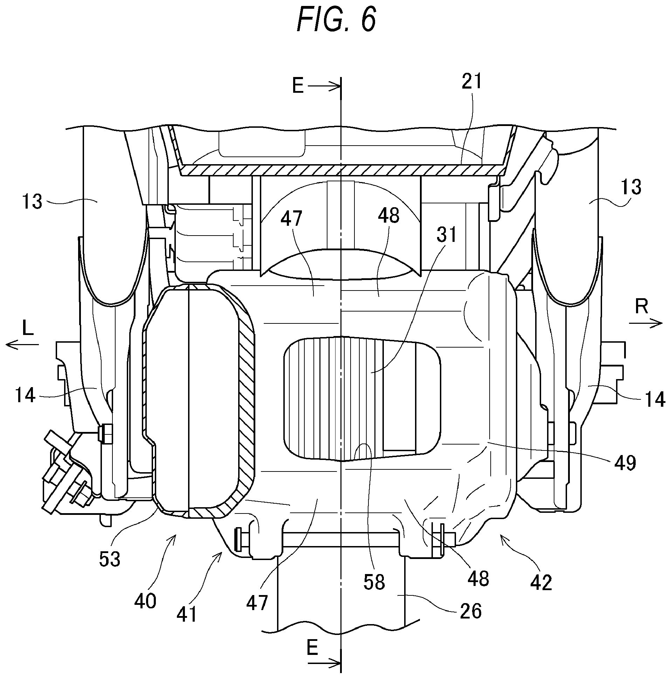

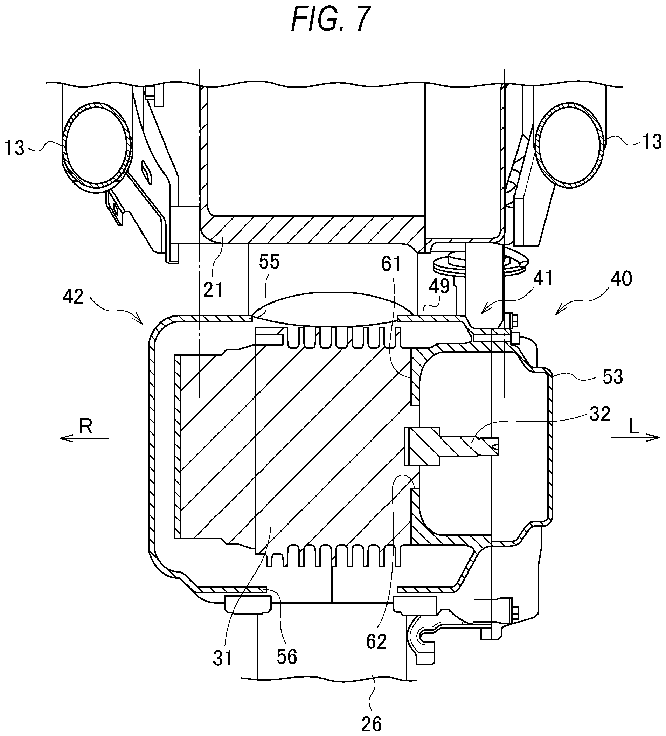

The structure of a rear portion of the straddle-type vehicle will be described below with reference to FIGs. 2 to 7. FIG. 2 is a right side view of a vehicle body rear portion according to the present embodiment. FIG. 3 is a cross-sectional view of the vehicle body rear portion in FIG. 2 taken along a line A-A. FIG. 4 is a bottom view of the vehicle body rear portion according to the present embodiment. FIG. 5 is a cross-sectional view of the vehicle body rear portion in FIG. 2 taken along a line B-B. FIG. 6 is a cross-sectional view of the vehicle body rear portion in FIG. 2 taken along a line C-C. FIG. 7 is a cross-sectional view of the vehicle body rear portion in FIG. 2 taken along a line D-D. In FIG. 7, a continuously variable transmission is omitted.

As shown in FIG. 2, a pair of side frames 13 extend obliquely upward from the front to the rear at the vehicle body rear portion of the straddle-type vehicle 1. The battery 21 and the storage box 22 are installed side by side in a front-rear direction, inside the pair of side frames 13. A battery case of the battery 21 is formed in a substantially rectangular shape in a side view. A plurality of cells (single cells) are housed inside the battery case. In a side view, the battery 21 is tilted forward such that a lower corner on a front side of the battery 21 is the lowest, an upper corner on the rear side of the battery 21 is the highest, an upper corner on the front side of the battery 21 is the most forward, and a lower corner on the rear side of the battery 21 is the most rearward.

A fixing bracket 15 protrudes upward from the vicinity of a rising edge of each of the pair of side frames 13. A fixing bracket 16 protrudes downward from an intermediate position of each of the pair of side frames 13. The lower corner on the front side of the battery 21 is fixed to the front fixing bracket 15. The lower corner on the rear side of the battery 21 is fixed to the rear fixing bracket 16. The pivot bracket 14 protrudes downward from the vicinity of the rising edge of each of the pair of side frames 13. The swing arm 40 is swingably supported by the pivot bracket 14 via a pivot shaft 17. The swing arm 40 and the rear end portion are coupled to the side frame 13 via the rear suspension 27.

As shown in FIGs. 2 and 3, the swing arm 40 has a left-right split structure including a pair of arm halves 41 and 42. The left arm half 41 extends rearward than the right arm half 42. Pivot portions 43 and 44 are provided at arm front end portions of the pair of arm halves 41 and 42, respectively. The pivot portions 43 and 44 are coupled to the vehicle body frame 10 (pivot bracket 14). Front arms 45 and 46 extend rearward from the pivot portions 43 and 44, respectively. A plurality of columnar portions 47 and 48 extend inward in a vehicle width direction from four corners of both rear side portions of the front arms 45 and 46. The plurality of columnar portions 47 and 48 are screwed together to form a case 49. The motor 31 is housed in the case 49.

A rear arm 51 extends rearward from the left half of the case 49. No arm extends rearward from the right half of the case 49. A rear wheel support portion 52 is provided at a rear end portion of the rear arm 51, which is an arm rear end portion of the left arm half 41. The rear wheel 26 is rotatably supported by the rear wheel support portion 52. A swing arm cover 53 is attached to an opened left side surface of the left arm half 41. A belt-type continuously variable transmission (not shown) is housed inside the left arm half 41 and the swing arm cover 53. The left arm half 41 and the swing arm cover 53 form a belt cover of the continuously variable transmission.

By forming the case 49 in front of the arm rear end portion, the motor 31 is positioned at the center of the vehicle body in the front-rear direction. Since the center of the vehicle body is covered with a vehicle body cover or the like, even if the motor 31 is exposed to the outside, the motor is not easily accessible to a driver. Therefore, the case 49 is formed by the columnar portions 47 and 48 so as to surround the motor 31, and openings 55 to 58 (see FIGs. 4 to 6 for the openings 56 to 58) are formed on an upper surface, a lower surface, a front surface, and a rear surface of the case 49, respectively. The motor 31 is exposed to the outside through the openings 55-58 of the swing arm 40 at the center of the vehicle body, thereby reducing a rise in the temperature of the motor 31.

In a side view, a front half of the swing arm 40 from the pivot portions 43 and 44 to the case 49 is positioned directly below the battery 21. As described above, the battery 21 is supported by the side frames 13 in a forward tilting position, and the lower corner on the front side of the battery 21 is positioned lower than the case 49. At this time, a lower surface of the battery 21 is positioned outside a swing space of the swing arm 40 about the pivot shaft 17. In a case where the swing arm 40 swings, interference between the swing arm 40 and the battery 21 is prevented, and the lower surface of the battery 21 is brought close to the swing arm 40, thereby lowering the center of gravity of the vehicle.

In this way, even if the battery 21 is brought close to the swing arm 40, the motor 31 can be positioned directly below the battery 21. By moving the motor 31, which is a heavy object, closer to the center of gravity of the vehicle, the moment of inertia at the time of turning is reduced, and a decrease in driving performance is reduced. The motor 31 is located closer to the pivot portions 43 and 44 than is the rear wheel support portion 52. Since the motor 31 is located in front of the rear wheel 26, vibrations from the rear wheel 26 due to the unevenness on the road surface are less likely to be transmitted to the motor 31. The structure of the swing arm 40 is simplified because the vibration resistance required for the fasteners of the motor 31 to the case 49 and the motor 31 is relaxed.

The rear suspension 27 is connected to a rear end of the swing arm 40. By bringing the motor 31 closer to the pivot shaft 17, the unsprung load becomes lighter. The rear suspension 27 becomes easier to move, and the rear wheel 26 follows the unevenness on the road surface, improving riding comfort. Further, in a general swing arm, a large bending moment acts in the vicinity of the pivot, and therefore, it is desirable that the arm front end portion side is formed wide and the arm rear end portion side is formed narrowly. In the present embodiment, the swing arm 40 is formed in a wide width by the case 49 on the arm front end portion side, thereby increasing the rigidity of the swing arm 40.

As shown in FIG. 3, the substantially rectangular opening 55 is formed between the columnar portions 47 and 48 on the upper surface of the case 49 of the swing arm 40. An upper surface of the motor 31 is exposed to the outside through the opening 55 in the upper surface of the case 49, and hot air warmed by the motor 31 and lightened is released from the opening 55 to the outside. The hot air is less likely to be trapped in the case 49, and a rise in the temperature of the motor 31 is reduced. The battery 21 (see FIG. 2) is positioned above the case 49. The opening 55 on the upper surface of the case 49 is covered with the battery 21 from above. Even if the opening 55 is formed largely on the upper surface of the case 49, the motor 31 is not easily accessible to a driver, and safety is ensured.

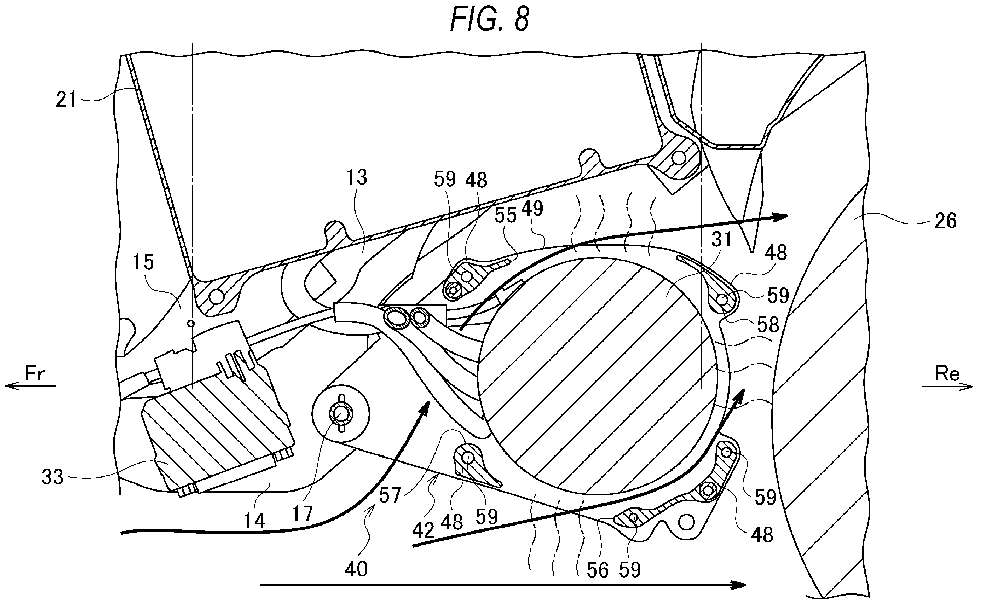

In the present embodiment, a left end portion of the opening 55 on the upper surface of the case 49 is located on an inner side in a left-right direction of the vehicle body than a left end portion of the battery 21. Similarly, a right end portion of the opening 55 on the upper surface of the case 49 is located on the inner side in the left-right direction of the vehicle body than the battery 21 (see FIG. 7). Further, a front end portion of the opening 55 on the upper surface of the case 49 is located on the rear side than a front end portion of the lower surface of the battery 21. Similarly, a rear end portion of the opening 55 on the upper surface of the case 49 is located on the inner side in the left-right direction of the vehicle body than a rear end portion of the lower surface of the battery 21 (see FIG. 8).

As shown in FIG. 4, the substantially rectangular opening 56 is formed, between the columnar portions 47 and 48, on the lower surface of the case 49 of the swing arm 40. A lower surface of the motor 31 is exposed to the outside through the opening 56 in the lower surface of the case 49, and the hot air warmed by the motor 31 is released from the opening 56 along with the traveling wind. The hot air is less likely to be trapped in the case 49, and a rise in the temperature of the motor 31 is reduced. A road surface is below the case 49, and the opening 56 on the lower surface of the case 49 is not easily visible from a driver. Even if the opening 56 is formed largely on the lower surface of the case 49, the motor 31 is not easily accessible to a driver, and safety is ensured.

As shown in FIG. 5, the substantially rectangular opening 57 is formed, between the columnar portions 47 and 48, on the front surface of the case 49 of the swing arm 40. A front surface of the motor 31 is exposed to the outside through the opening 57 in the front surface of the case 49, and the motor 31 is cooled by the traveling wind taken in through the opening 57 on the front surface of the case 49, thereby reducing a rise in the temperature of the motor 31. An electronic device 33 such as an inverter is positioned in front of the case 49, and the opening 57 in the front surface of the case 49 is covered with the electronic device 33 from the front (see FIGs. 5 and 8). Even if the opening 57 is formed largely on the front surface of the case 49, the motor 31 is not easily accessible to a driver, and safety is ensured.

The pair of front arms 45 and 46 extend from the case 49 toward the pivot portions 43 and 44. A facing distance between the front arms 45 and 46 increases toward the front side, and a front space of the case 49 widens in the left-right direction toward the front side. A larger amount of traveling wind is taken into the case 49 through the opening 57 on the front surface of the case 49, and the motor 31 is effectively cooled. A cable 34 extending from the battery 21 or the electronic device 33 is connected to the motor 31 through the opening 57 on the front surface of the case 49. The opening 57 on the front surface of the case 49 functions as a passage for the cable 34 of the battery 21 and the electronic device 33.

As shown in FIG. 6, the substantially rectangular opening 58 is formed, between the columnar portions 47 and 48, on the rear surface of the case 49 of the swing arm 40. A rear surface of the motor 31 is exposed to the outside through the opening 58 on the rear surface of the case 49, and the hot air warmed by the motor 31 is released from the opening 58 to a wide rear space on the rear wheel 26 side. The hot air is less likely to be trapped in the case 49, and a rise in the temperature of the motor 31 is reduced. The rear wheel 26 (see FIG. 2) is positioned behind the case 49. The opening 58 on the rear surface of the case 49 is covered with the rear wheel 26 from rear. Even if the opening 58 is formed largely on the rear surface of the case 49, the motor 31 is not easily accessible to a driver, and safety is ensured.

As shown in FIG. 7, the inside of the case 49 of the swing arm 40 is divided into right and left parts by a partition wall 61 of the left arm half 41. The motor 31 is housed in a space on the right side of the partition wall 61 of the case 49, and the continuously variable transmission is housed in a space on the left side of the partition wall 61 of the case 49. The motor 31 is screwed to a right side surface of the partition wall 61 with a plurality of bolts (not shown). A circular opening 62 is formed in the center of the partition wall 61, and an output shaft 32 of the motor 31 protrudes through the circular opening 62 into the space on the left side of the partition wall 61. A drive pulley (not shown) of the continuously variable transmission is coupled to the output shaft 32 of the motor 31.

The motor 31 is fixed to the partition wall 61 in a state where the periphery of the output shaft 32 of the motor 31 is in surface contact with the partition wall 61 of the case 49. At this time, a left side surface around the output shaft 32 of the motor 31 is a heat dissipation surface, and the right side surface of the partition wall 61 in contact with the motor 31 is a heat absorption surface. Heat is efficiently transferred to the partition wall 61 of the case 49 from a wide region of the left side surface of the motor 31, except for the output shaft 32. The heat of the motor 31 is transferred to the case 49, and the swing arm 40 functions as a heat sink, thereby reducing a rise in the temperature of the motor 31. For this reason, the swing arm 40 is made of a material with high heat dissipation, such as an aluminum alloy.

A cooling structure of the motor will be described with reference to FIG. 8. FIG. 8 is a cross-sectional view of the vehicle body rear portion in FIG. 6 taken along a line E-E.

As shown in FIG. 8, the case 49 of the swing arm 40 is formed by fixing the columnar portions 47 of the left arm half 41 (see FIG. 3) and the columnar portions 48 of the right arm half 42. The columnar portions 47 and 48 of the case 49 are located diagonally above the front, diagonally below the front, diagonally above the rear, and diagonally below the rear of the motor 31 so as to surround the circular motor 31 from all sides. A plurality of fixing bolts 59 pass through the columnar portions 47 and 48, and the left arm half 41 and the right arm half 42 are fixed by the plurality of fixing bolts 59 to form the case 49. The openings 55 to 58 are formed on the upper surface, the lower surface, the front surface, and the rear surface of the case 49, respectively.

The opening 57 on the front surface of the case 49 faces forward. The opening 56 on the lower surface of the case 49 faces obliquely downward and forward. Traveling wind is taken into the case 49 through the opening 57 on the front surface of the case 49, the traveling wind flows along the upper surface from the front surface of the motor 31, and the traveling wind exits to the outside of the case 49 through the opening 55 on the upper surface of the case 49. Traveling wind is also taken into the case 49 through the opening 56 on the lower surface of the case 49, the traveling wind flows along the rear surface from the lower surface of the motor 31, and the traveling wind exits to the outside of the case 49 through the opening 58 on the rear surface of the case 49. The traveling wind is blown onto the motor 31 in the case 49, and the motor 31 is cooled.

At the upper portion of the motor 31, hot air is released upward from the opening 55 on the upper surface of the case 49, and the hot air is also swept rearward by the traveling wind passing through the opening 55 on the upper surface of the case 49. At the lower portion of the motor 31, hot air is released downward from the opening 56 on the lower surface of the case 49, and is also swept rearward along the traveling wind below the case 49. Further, the hot air is swept rearward by traveling wind that has entered through the opening 56 on the lower surface of the case 49. At the rear portion of the motor 31, hot air is released rearward from the opening 58 on the rear surface of the case 49, and the hot air is also swept rearward by the traveling wind passing through the opening 58 on the rear surface of the case 49.

Since the left side surface of the motor 31 is in surface contact with the left arm half 41 (see FIG. 7), heat of the motor 31 is transferred to the left arm half 41. As described above, traveling wind is blown onto the upper surface, the lower surface, the front surface, and the rear surface of the motor 31, and the hot air warmed by the motor 31 is released through the openings 55 to 58 of the case 49, thereby cooling the peripheral surfaces of the motor 31. Heat is transferred from the left side surface of the motor 31 to the left arm half 41, thereby cooling the left side surface of the motor 31. Although a right side surface of the motor 31 is separated from the right arm half 42, the traveling wind also flows through a gap between the right side surface of the motor 31 and the right arm half 42, thereby cooling the right side surface of the motor 31.

As described above, according to the straddle-type vehicle 1 of the present embodiment, by positioning the motor 31 in the center of the vehicle body in front of the rear wheel 26, the motor 31 is not easily accessible to a driver, and it is not necessary to completely cover the motor 31 with the case 49. By forming the openings 55 to 58 in the case 49, the heat of the motor 31 is easily released through the openings 55 to 58 of the case 49, and a decrease in the output of the motor 31 due to a rise in the temperature is prevented. Vibrations from the rear wheel 26 are less likely to be transmitted to the motor 31, the vibration resistance required for the motor 31 and the fasteners is relaxed, and the base end side is widened by the case 49, so that the rigidity of the swing arm 40 is increased.

In the present embodiment, the motor is described as an example of the electric component. Alternatively, the electric component may be a battery, a fuel cell, a converter and the like, and the battery, the fuel cell, the converter and the like may be housed in the case of the swing arm.

Further, in the present embodiment, the swing arm is formed by a left-right split structure including the pair of arm halves. It is sufficient as long as the electric component can be housed in the swing arm. For example, the swing arm may be formed with an upper-lower split structure including a pair of arm halves.

Further, in the present embodiment, the openings are formed on the upper surface, the lower surface, the front surface, and the rear surface of the case. Alternatively, the opening may be formed on at least one of the upper surface, the lower surface, the front surface, and the rear surface of the case.

Further, in the present embodiment, the pivot portions are formed to be separated into right and left, but the shape of the pivot is not particularly limited as long as the pivot can be connected to the vehicle body frame.

Further, the swing arm according to the present embodiment is not limited to the above-described straddle-type vehicle, and may be adopted in other straddle-type vehicles. The straddle-type vehicle is not limited to a general vehicle in which a driver rides on a seat in a posture straddling the seat, and includes a scooter-type vehicle in which the driver rides on the seat without straddling the seat.

As described above, a first aspect is a straddle-type vehicle (1) including: a swing arm (40) swingably supported by a vehicle body frame (10). The swing arm includes a pivot (43, 44) configured to be coupled to the vehicle body frame at a front end portion of the swing arm, a rear wheel support portion (52) configured to rotatably support a rear wheel (26) at a rear end portion of the swing arm, and a case (49) configured to house an electric component (motor 31) in front of the rear end portion of the swing arm, and the case is formed with an opening (55 to 58) through which the electric component is exposed to the outside. According to this configuration, by positioning the electric component in the center of a vehicle body in front of the rear wheel, the motor is not easily accessible to a driver, and it is not necessary to completely cover the electric component with a case. By forming the opening in the case, the heat of the electric component is easily released from the opening of the case, and it is possible to reduce a decrease in the performance of the electric component caused by a rise in the temperature of the electric component.

A second aspect is directed to the first aspect, in which the swing arm has a left-right split structure including a pair of arm halves (41, 42), a plurality of columnar portions (47, 48) extend from the pair of arm halves toward an inner side in a left-right direction, and the case is formed by the plurality of columnar portions. According to this configuration, the case surrounding the electric component and the opening for exposing the electric component are formed by the columnar portions of the pair of arm halves.

A third aspect is directed to the first aspect or the second aspect, in which the electric component is a motor. According to this configuration, heat of the motor is easily released from the opening of the case, and a decrease in the output due to a rise in the temperature of the motor can be prevented. Since the motor is separated from the rear wheel, vibrations due to the unevenness on the road surface are less likely to be transmitted to the motor, and the vibration resistance required for the motor and the fasteners is relaxed. A large bending moment acts in the vicinity of the pivot, but since the case is formed on the pivot side, the pivot side is widened and the rigidity of the swing arm can be increased.

A fourth aspect is directed to the third aspect, in which a periphery of an output shaft (32) of the motor is in surface contact with the case. According to this configuration, the heat of the motor is transferred to the case, and the swing arm functions as a heat sink, thereby reducing a rise in the temperature of the motor. The heat is efficiently transferred from the motor to the case using a wide area around the output shaft of the motor.

A fifth aspect is directed to any one of the first to fourth aspects, in which the opening (58) is formed in a rear surface of the case. According to this configuration, the hot air warmed by the electric component can be released from the opening on the rear surface of the case to a wide rear space on the rear wheel side.

A sixth aspect is directed to any one of the first to fifth aspects, in which the opening (56) is formed in a lower surface of the case. According to this configuration, the hot air warmed by the electric component can be released from the opening on the lower surface of the case along with the traveling wind.

A seventh aspect is directed to any one of the first to sixth aspects, in which the opening (55) is formed in an upper surface of the case. According to this configuration, the hot air warmed by the electric component and lightened can be released from the opening on the upper surface of the case.

An eighth aspect is directed to any one of the first to seventh aspects, in which the opening (57) is formed in a front surface of the case. According to this configuration, the traveling wind is taken in from the opening on the front surface of the case, and the electric component is cooled.

A ninth aspect is directed to eighth aspect, in which the pivot includes a pair of pivot portions spaced apart from each other in a left-right direction, and a front space of the case expands in the left-right direction toward a front side. According to this configuration, the opening on the front surface of the case expands to the left and right, and more traveling wind is taken into the case and the electric component is effectively cooled.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

## Claims

1. A straddle-type vehicle (1) comprising:
a swing arm (40) swingably supported by a vehicle body frame (10),
wherein the swing arm (40) includes:
a pivot (43, 44) configured to be coupled to the vehicle body frame (10) at a front end portion of the swing arm (40);
a rear wheel support portion (52) configured to rotatably support a rear wheel (56) at a rear end portion of the swing arm (40); and
a case (49) configured to house an electric component (31) in front of the rear end portion of the swing arm (40), and
wherein the case is formed with an opening (55 to 58) through which the electric component (31) is exposed to the outside.

2. The straddle-type vehicle according to claim 1,
wherein the swing arm (40) has a left-right split structure including a pair of arm halves (41, 42),
a plurality of columnar portions (47, 48) extend from the pair of arm halves (41, 42) toward an inner side in a left-right direction, and
the case (49) is formed by the plurality of columnar portions (47, 48).

3. The straddle-type vehicle according to claim 1 or 2,
wherein the electric component (31) is a motor.

4. The straddle-type vehicle according to claim 3,
wherein a periphery of an output shaft (32) of the motor is in surface contact with the case (49).

5. The straddle-type vehicle according to claim 1 or 2,
wherein the opening (58) is formed in a rear surface of the case (49).

6. The straddle-type vehicle according to claim 1 or 2,
wherein the opening (56) is formed on a lower surface of the case (49).

7. The straddle-type vehicle according to claim 1 or 2,
wherein the opening (55) is formed on an upper surface of the case (49).

8. The straddle-type vehicle according to claim 1 or 2,
wherein the opening (57) is formed on a front surface of the case (49).

9. The straddle-type vehicle according to claim 8,
wherein the pivot (43, 44) includes a pair of pivot portions spaced apart from each other in a left-right direction, and
a front space of the case (49) expands in the left-right direction toward a front side.
